# EUROPÄISCHE PATENTSCHRIFT

(11) **EP 1 050 251 B1**
(45) Veröffentlichungstag und Bekanntmachung des Hinweises auf die Patenterteilung: **28.07.2004**
(21) Anmeldenummer: 00109393.9
(22) Anmeldetag: 03.05.2000
(51) Int. Cl.: A47C 23/06

(54) **Lattenrost**
Slatted bed-base
Sommier à lattes

(30) Priorität: 04.05.1999 DE 29907850 U
(43) Veröffentlichungstag der Anmeldung: 08.11.2000
(73) Patentinhaber: RÖSSLE & WANNER GMBH, 72116 Mössingen (DE)
(72) Erfinder: Glaser, Hermann, 72116 Mössingen (DE)
(74) Vertreter: Ostertag, Reinhard

(56) Entgegenhaltungen:
- WO-A-90/14781
- DE-A- 3 246 221
- DE-A- 3 307 435
- DE-A- 19 600 434
- DE-U- 9 112 825
- GB-A- 243 915
- GB-A- 1 230 872
- US-A- 3 663 055

## Beschreibung

Die Erfindung betrifft einen Lattenrost gemäß dem Oberbegriff des Anspruchs 1.

Ein derartiger Lattenrost ist in der DE 196 00 434 A1 offenbart. Bei ihm sind auf Latten, die über elastische Beschlagteile an beliebiger Stelle auf Rahmenlängsholmen aufclipsbar sind, Schaumstoffstreifen aufgebracht, die durch transversale Einschnitte in einzelne Schaumstoffprismen unterteilt sind. Diese tragen auf ihren Stirnflächen harte Platten. Auf diese Weise erhält man eine insgesamt verforbare Auflagefläche für eine Matratze.

In der US 3 663 055 A ist ein Sitzmöbel beschrieben, bei welchem zylindrische Polsterlemente, die auf mittigen Latten sitzen, über Exzenterbeschläge an Seitenteilen des Sitzmöbels angebracht sind. Auf diese Weise läßt sich die Kontur der Sitzfläche und der Lehenfläche einstellen.

Bei einem in der DE 32 46 221 A offenbarten Lattenrost sind auf Latten, die über elastische Beschlagteile an beliebiger Stelle auf Rahmenlängsholme aufclipsbar sind, Schaumstoffstreifen aufgebracht, die durch transversale Einschnitte in einzelne Schaumstoffprismen unterteilt sind. Diese tragen auf ihren Stirnflächen harte Platten. Auf diese Weise erhält man eine insgesamt verformbare Auflagefläche für eine Matratze.

Die WO 90/14781 A offenbart einen Lattenrost, bei welchen die Latten mit Mitteln versehen sind, um die Latten-Vorspannung einstellen zu können. Beim Ausführungsbeispiel nach der dortigen Figur 14 ist über den einzelnen Latten ein Schaumstoff-Sitzpolster vorgesehen. Dieses Sitzpolster ist gemäß Zeichnung mit seiner Umfangswand in die Umfangswand eines Rahmens formschlüssig eingesetzt und dort gehalten.

In der DE 91 12 825 U ist ferner eine Matratze offenbart, die aus einer Mehrzahl in Matratzenlängsrichtung aufeinanderfolgender quadratischen Querschnitt aufweisender Polsterkörper zusammengestellt ist. Diese haben jeweils unterschiedliche Härte, um die Nachgiebigkeit der Matratze in Matratzenlängsrichtung zu variieren.

Weitere Lattenroste mit von den Latten getragenen Polsterkörpern sind aus den Druckschriften DE-A-33 07 435 und GB-A-1 230 872 bekannt.

Weitere Lattenroste ohne von den Latten getragene Schaumstoffstreifen sind in vielfältiger unterschiedlicher Ausführung auf dem Markt. Sie werden zusammen mit Matratzen verwendet, welche auf die durch die Oberseiten der Latten gebildete quasikontinuierliche Liegefläche des Lattenrostes aufgelegt werden.

Es sind schon verschiedene Anstrengungen gemacht worden, das Federverhalten des Lattenrostes lokal zu verändern, z.B. im Schulterbereich eine größere Nachgiebigkeit des Lattenrostes zu erhalten. Hierzu können im Schulterbereich des Lattenrostes z.B. besondere federnde Beschläge verwendet werden, über welche die Enden der Latten am Rahmen des Lattenrostes gelagert sind. Diese federnden Beschläge können verglichen mit anderen federnden Beschlägen, die im restlichen Rostbereich eingesetzt werden, vergrößerten Federweg haben.

Auch mit derartigen Maßnahmen ist aber den unterschiedlichen individuellen Anforderungen eines Benutzers nicht voll Rechnung zu tragen. Auch kann man mit Maßnahmen, welche die Lagerung der Latten am Rahmen betreffen, keine in Breitenrichtung des Lattenrostes variierende Liegecharakteristik erzielen.

Durch die vorliegende Erfindung soll daher ein Lattenrost gemäß dem Oberbegriff des Anspruches 1 so weitergebildet werden, daß die lokale Härte der Liegefläche vom Benutzer selbst nach seinen Bedürfnissen gewählt werden kann und der Lattenrost direkt als Möbel (Liege) verwendet werden kann.

Diese Aufgabe ist erfindungsgemäß gelöst durch einen Lattenrost mit den im Anspruch 1 angegebenen Merkmalen.

Bei einem erfindungsgemäßen Lattenrost kann der Benutzer einzelne Polsterelemente austauschen und deren Position variieren. Auf diese Weise läßt sich die Härte auch in transversaler Richtung des Lattenrostes einfach einstellen. Durch Austausch von Polsterelementen kann man auch eine sehr starke Variation der Härte erzielen. Ein weiterer Vorteil des erfindungsgemäßen Lattenrostes ist der, daß man Bereiche des Lattenrostes getrennt neu bestücken kann, wenn einzelne der Polsterelemente im Lauf der Benutzung an Federkraft verloren haben.

Darüber hinaus sind die aus Schaumstoff hergestellten Polsterelemente gegen Abrieb geschützt.

Vorteilhafte Weiterbildungen der Erfindung sind in Unteransprüchen angegeben.

Mit der Weiterbildung der Erfindung gemäß Anspruch 2 wird eine Positionierung der Polsterelemente auf den Latten in der jeweils gewünschten Stellung erhalten. Zugleich kann der Benutzer die Polsterelemente auch einfach umsetzen und austauschen.

Die Weiterbildung der Erfindung gemäß Anspruch 3 erlaubt eine einfache Feineinstellung des Härteprofiles in transversaler Rostrichtung.

Gemäß Anspruch 4 können die Polsterelemente zugleich die Funktion einer Matratze übernehmen. Entsprechende elastisch verformbare Materialien in Form von Schaumstoffen, Schaumgummi usw. sind als industrielle Produkte für die Matratzenherstellung im Handel erhältlich und lassen sich leicht für Zwecke der Erfindung anpassen. Auch kann man die bekannte Technik der Matratzenherstellung auf die erfindungsgemäß vorgesehenen Polsterelemente übertragen.

Den letztgenannten Vorteil erhält man gleichermaßen bei einem Lattenrost gemäß Anspruch 5, wobei jedoch als die Haupt-Federkraft der Polsterelemente erbringenden Elemente Federn, z.B. Schraubenfedern verwendet werden, wie von Federkernmatratzen her bekannt. Derartige Schraubenfedern sind in stark unterschiedlicher Härte für die Herstellung von Federkernmatratzen verfügbar.

Bei einem Lattenrost gemäß Anspruch 6 hat man im unbelasteten Zustand eine im wesentlichen durchgehende ebene Liegefläche.

Nachstehend wird die Erfindung anhand von Ausführungsbeispielen unter Bezugnahme auf die Zeichnung näher erläutert. In dieser zeigen:
- Figur 1:: eine Aufsicht auf einen nicht erfindungsgemäßen Lattenrost mit in longitudinaler und transversaler Richtung einstellbarer Härte;
- Figur 2:: einen transversalen Schnitt durch einen seitlichen Randbereich des Lattenrostes nach Figur 1, aus welchem sich Einzelheiten der Lagerung der Lattenenden ergeben;
- Figur 3:: einen in Rostlängsrichtung verlaufenden Schnitt durch zwei benachbarte Latten des nicht erfindungsgemäßen Lattenrostes und ein auf diesen sitzendes Polsterelement;
- Figur 4:: eine ähnliche Ansicht wie Figur 3, wobei jedoch ein erfindungsgemäßen Lattenrost wiedergegeben ist, bei welchem Polsterelemente jeweils von einer einzigen Latte getragen sind;
- Figur 5:: eine ähnliche Ansicht wie Figur 1, in welcher ein nochmals abgewandelter nicht erfindungsgemäßen Lattenrost gezeigt ist;
- Figur 6:: eine ähnliche Ansicht wie Figur 1, in welcher ein nochmals abgewandelter nicht erfindungsgemäßen Lattenrost gezeigt ist;
- Figur 7:: einen transversalen Schnitt durch den Lattenrost nach Figur 6 im Schulterbereich;
- Figur 8:: einen transversalen Schnitt durch den Lattenrost nach Figur 6 im Beckenbereich;
- Figur 9:: eine ähnliche Ansicht wie Figur 1, wobei jedoch bei diesem nicht erfindungsgemäßen Lattenrost die Latten mit durchgehenden gestreckten Polsterelementen bestückt sind;
- Figur 10:: einen vergrößerten transversalen Schnitt durch eine Latte des Lattenrostes nach Figur 9 und ein auf dieses aufgesetztes Polsterelement;
- Figur 11:: eine seitliche Aufsicht auf einen Teil eines weiter abgewandelten nicht erfindungsgemäßen Lattenrahmens mit lokal unterschiedlicher Härte;
- Figur 12:: einen transversalen vertikalen Teilschnitt durch eine nicht erfindungsgemäße Polsterliege;
- Figur 13:: eine ähnliche Ansicht wie Figur 11, in welcher eine Rastverbindung zwischen einer Latte und dem Rahmenlängsholm wiedergegeben ist; und
- Figur 14:: eine Teilaufsicht auf einen Randbereich eines nicht erfindungsgemäßen Lattenrostes, in welcher eine Drehverriegelung für ein Lattenende gezeigt ist.

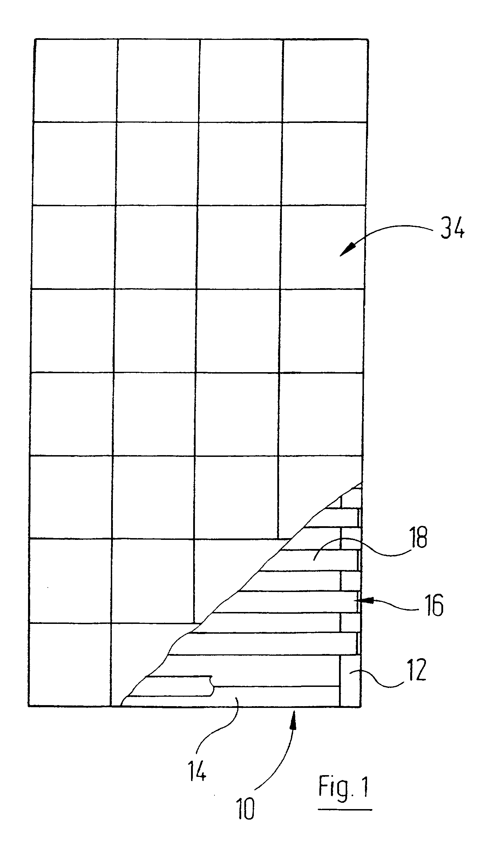

Der in Figur 1 wiedergegebene Lattenrost hat einen insgesamt mit 10 bezeichneten Rahmen, welcher aus Längsholmen 12 und Querholmen 14 aufgebaut ist.

An den Längsholmen 12 sind über insgesamt mit 16 bezeichnete federnde Beschlagteile die Enden von Latten 18 gelagert. Letztere erstrecken sich in transversaler Richtung des Rahmens 10.

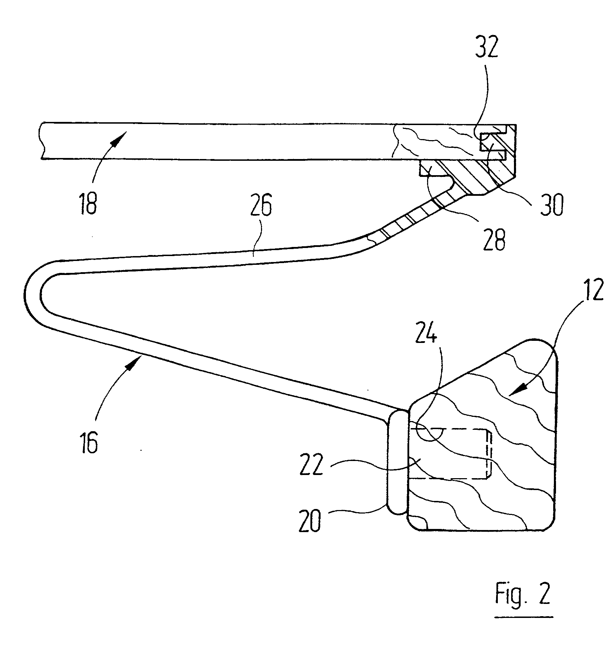

Wie aus Figur 2 ersichtlich, haben die Beschlagteile 16 jeweils eine Basisplatte 20 mit zwei in Holmlängsrichtung beabstandeten Zapfen 22, die in Sackbohrungen 24 eingreifen, die in der Innenseite der Längsholme 12 vorgesehen sind. Die Basisplatte 20 trägt zwei V-förmige Federabschnitte 26, die so angeordnet sind, daß die Spitze des V zur Rostinnenseite weist. Die Enden der Federabschnitte 26 tragen jeweils eine abgewinkelte Halteplatte 28, die mit der Unterseite des Endes der Latte 18 und deren Stirnseite zusammenarbeitet. Ein vertikaler Abschnitt der Halteplatte 28 trägt einen Haltezapfen 30, der in eine Sackbohrung 32 eingreift, die in der Stirnfläche der Latte 18 vorgesehen ist.

Durch diese Art der Halterung der Latten 18 ist gewährleistet, daß deren Oberseite und deren Seitenflächen glatt bis zum seitlichen Rand des Rahmens 10 hindurchlaufen.

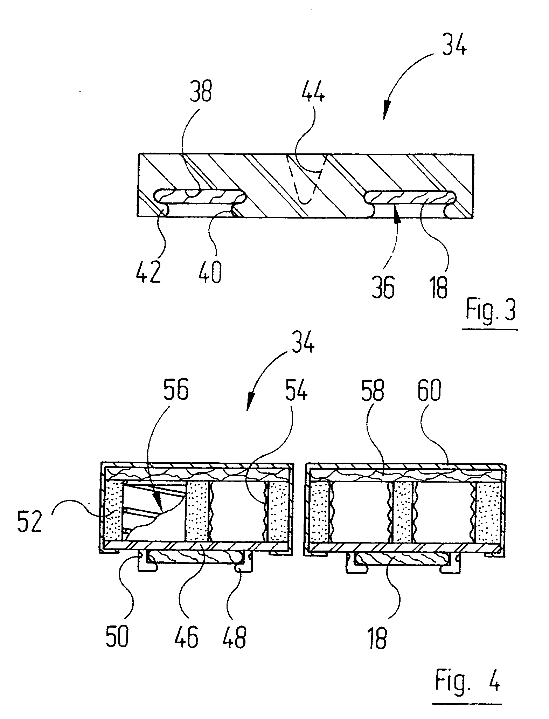

Wie aus den Figuren 1 und 3 ersichtlich, sind auf die Latten 18 Polsterelemente 34 lösbar aufgesetzt. Bei dem Ausführungsbeispiel gemäß Figur 3 sind die Polsterelemente 34 Schaumstoffteile, welche in ihrer Unterseite mit zwei Formnuten 36 versehen sind, in welche jeweils eine Latte 18 paßt. Die Formnuten 36 haben einen oberen Nutabschnitt 38 zur formschlüssigen Aufnahme einer Latte 18 und einen verringerte Breite aufweisenden unteren Nutabschnitt 40. Auf diese Weise erhält man jeweils zwei Haltenasen 42, welche die Unterseite einer Latte 18 untergreifen. Auf Grund der Elastizität des Schaummateriales lassen sich aber die Haltenasen 42 so elastisch verformen, daß man die Polsterelemente 34 auf die Latten 18 aufsetzen und von diesen wieder abnehmen kann.

Um das Abnehmen eines Polsterelementes 34 von zwei benachbarten Latten leichter vornehmen zu können, kann man in der Oberseite eines Polsterelementes 34 eine V-förmige Rinne 44 vorsehen. Die so erhaltenen Hälften des Polsterelementes können dann leicht gegeneinander verkippt werden, was das Abnehmen des Polsterelementes 34 zuerst von der einen Latte und dann von der anderen Latte ermöglicht.

Wie aus Figur 1 ersichtlich, ist die gesamte Liegefläche des Lattenrostes durch Polsterelemente 34 lückenlos gefüllt. Unter den Polsterelementen sind solche, die in der Zeichnung mit einem W (weich) gekennzeichnet sind, während weitere Polsterelemente mit M (mittelhart) bzw. H (hart) gekennzeichnet sind.

Typischerweise wird man im Bereich des Gesässes harte Polsterelemente H verwenden, im Schulterbereich weiche Polsterelemente W verwenden und im übrigen Bereich des Lattenrostes Polsterelemente H mittlerer Härte verwenden, wie schematisch in Figur 1 angedeutet.

Der Benutzer kann nun selbst noch festlegen, wo er harte, mittelharte und weiche Polsterelemente haben möchte und die Polsterelemente entsprechend umsetzen.

In der Praxis kann man auch mehr als drei unterschiedliche Härten an Polsterelementen bereitstellen, so daß der Benutzer die lokale Härte der Liegefläche nach seinen Bedürfnissen in weiten Grenzen frei wählen kann.

In Abwandlung des oben beschriebenen Ausführungsbeispieles kann man auch Polsterelemente 34 verwenden, die ähnlich aufgebaut sind wie Federkernmatratzen. Gemäß Figur 4 haben solche Polsterelemente eine z.B. aus Kunststoff gespritzte Basisplatte 46, die an gegenüberliegenden Enden ihrer Unterseite mit Haltenasen 48 versehen ist, die der Basisplatte 46 benachbarte Biegeabschnitte 50 haben.

Auf die Oberseite der Basisplatte 46 ist eine Schaumstoffschicht 52 aufgesetzt, welche zylindrische Ausnehmungen 54 aufweist, in welche jeweils ein Taschenfedernkern 56 eingesetzt ist.

Die Oberseite der Schaumstoffschicht 52 trägt eine Wattierung 58, und die gesamte Anordnung ist durch einen Überzug 60 eingeschlossen.

Wie in Figur 4 dargestellt, sitzt auf jeder Latte eine Reihe zugeordneter Polsterelemente 34.

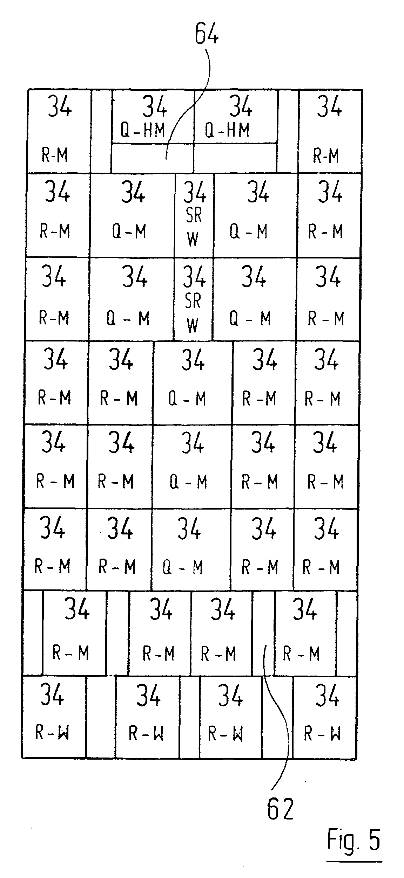

Beim abgewandelten Ausführungsbeispiel nach Figur 5 finden Polsterelemente 34 unterschiedlicher Größe Verwendung.

In einem mittleren Bereich der Liegefläche sind Polsterkörper 34Q-H vorgesehen, welche quadratische Randkontur haben und hart sind. An diese schließen sich in seitlicher Auswärtsrichtung rechteckigen Querschnitt aufweisende Polsterkörper 34R-M an, die mittelhart sind.

In einer weiter nach unten versetzten Reihe des Lattenrostes befindet sich ein mittiges mittelhartes Polsterelement 34Q-M mit quadratischem Querschnitt, und äußere mittelharte Polsterelemente 34R-M der betrachteten Reihe haben rechteckigen Querschnitt.

Bei der nochmals darunterliegenden Reihe von Polsterelementen hat man nur vier rechteckigen Querschnitt aufweisende Polsterelemente 34R-M, von denen die beiden mittleren auf Stoß zusammengefahren sind, während die außenliegenden Polsterelemente unter Freihaltung von Lücken 62 angeordnet sind. Die Lücken 62 sorgen für eine weitere Herabsetzung der Härte, da das Material der Polsterelemente in seitlicher Richtung nicht abgestützt ist.

In der untersten Reihe des Lattenrostes hat man vier weiche rechteckige Kontur aufweisende Polsterelemente 34R-W, die jeweils unter Freihaltung von Lücken 62 angeordnet sind. Auf diese Weise hat man in der untersten Reihe des Lattenrostes, wo bei Rückenlage des Benutzers die Fersen liegen, eine nur geringe Härte der Liegefläche.

Oberhalb des mittleren Bereiches der Liegefläche folgt eine Reihe von Polsterelementen, zu denen ein mittiges schmales rechteckiges Polsterelemente 34SR-W gehört. An dieses schließen sich seitlich zwei quadratische mittelharte Polsterelemente 34Q-M an, und die Enden der Reihe werden durch rechteckigen Querschnitt aufweisende Polsterelemente 34R-M gebildet.

Ähnliche Verhältnisse hat man in der darüberliegenden Reihe von Polsterelementen. Auf diese Weise bilden die mittleren Polsterelemente 34SR-W eine Art Rinne, in welche in Seitenlage Schulter und Arm des Benutzers eintauchen können.

Bei der obersten Reihe von Polsterelementen hat man zwei mittlere Polsterelemente 34Q-HM, die im unteren Abschnitt jeweils einen Bereich 64 erhöhter Härte aufweisen und im übrigen mittelhart sind. Die Bereiche 64 der auf Stoß zusammengefahrenen Polsterelemente 34Q-HM bilden eine Art Nackenrolle, welche im Gebrauch den Nacken des Benutzers unterstützt. Äussere Polsterelemente 34R-M der obersten Polsterelementreihe haben wieder rechteckigen Querschnitt und sind unter Belassung von Lücken 62 angeordnet.

Die verschiedenen Polsterelemente 34 haben im unbelasteten Zustand alle dieselbe Höhe, so daß sich bei unbelastetem Lattenrost eine glatt durchgehende Liegefläche ergibt.

Der oben beschriebene Lattenrost kann zum einen als reine Unterkonstruktion für eine herkömmliche Matratze dienen, man kann aber auch die Polsterelemente 34 bei der oben beschriebenen Ausgestaltung zusammen auch direkt als Matratze verwenden.

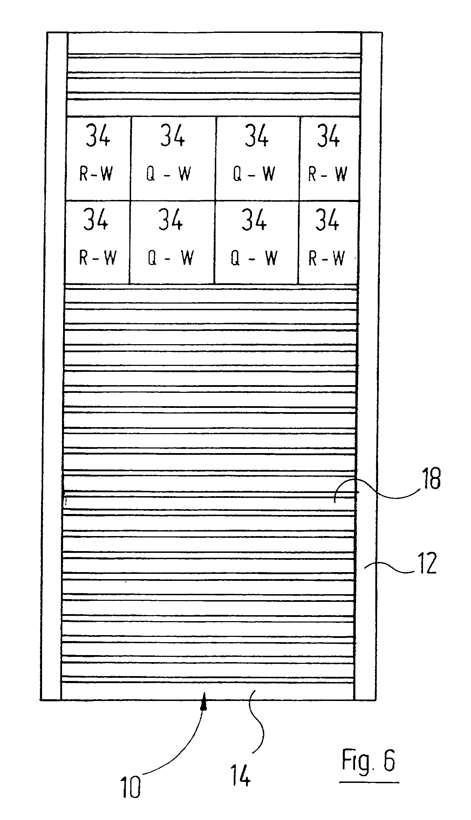

Die Figuren 6 bis 8 zeigen einen Lattenrost, der nur als Unterkonstruktion für eine Matratze Verwendung findet.

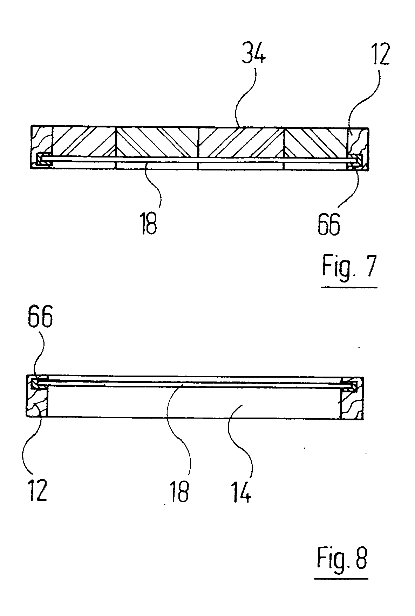

Der größte Teil der Liegefläche ist nur mit Latten 18 bestückt, die über ihre Enden aufnehmende elastomere Lagerkappen 66 direkt in den oberen Abschnitt der Längsholme 12 des Rahmens 10 eingesetzt sind, wie in Figur 8 gezeigt. Dies ermöglicht eine insgesamt sehr niedere Bauhöhe des Rahmens, wie sie aus ästhetischen Gründen zuweilen gefordert wird.

Um trotz der geforderten niederen Bauhöhe des Lattenrostes eine großhubige Nachgiebigkeit der Liegefläche im Schulterbereich zu gewährleisten, sind im Schulterbereich die Latten 18 über deren Lagerkappen 66 in einen unteren Abschnitt der Latten 18 eingesetzt, und die Latten tragen in diesem Bereich der Liegefläche Polsterelemente 34Q und 34R, wie oben beschrieben.

Dabei kann die Härte H, M oder W nach den Wünschen des Benutzers ausgewählt werden. Die Höhe der Polsterelemente 34 ist so bemessen, daß bei unbelastetem Lattenrost die Oberseite der im Schultereich vorgesehenen Polsterelemente 34 mit der Oberseite der außerhalb des Schulterbereiches verwendeten oben im Rahmen gelagerten Latten 18 fluchtet und damit der unbelastete Lattenrost eine durchgehende Oberfläche hat.

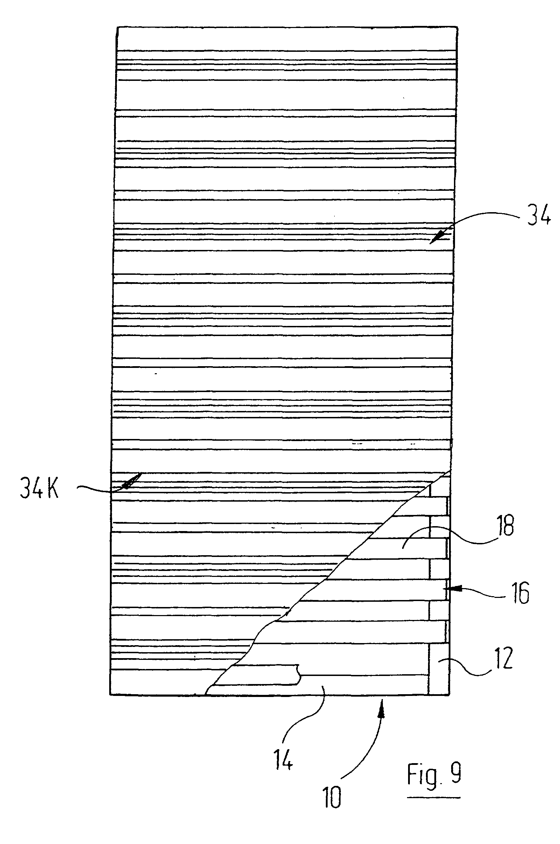

Figur 9 zeigt einen ähnlichen Lattenrost wie Figur 1 mit der Ausnahme, daß die einzelnen Polsterelemente 34 sich über die gesamte Länge der Latten 18 erstrecken. Man erhält so wieder eine bis zum Rand des Rahmens 10 reichende Liegefläche, die bei Starrheit der Latten 18 durchweg gleiche Nachgiebigkeit aufweist, insbesondere in der Mitte und am Rand gleich nachgiebig ist. Setzt man zwei derartige Lattenroste nebeneinander, wie dies in einem Doppelbett erfolgt, so hat man an der Stoßstelle zwischen den beiden Lattenrosten keine spürbare Verhärtung und auch keinen Spalt. Auch die Doppel-Liegefläche hat durchgehend gleiche Nachgiebigkeit.

Die Verwendung sich über die ganze Länge einer Latte 18 erstreckender Polsterelemente ist im Hinblick auf eine einfache Montage des Lattenrostes von Vorteil.

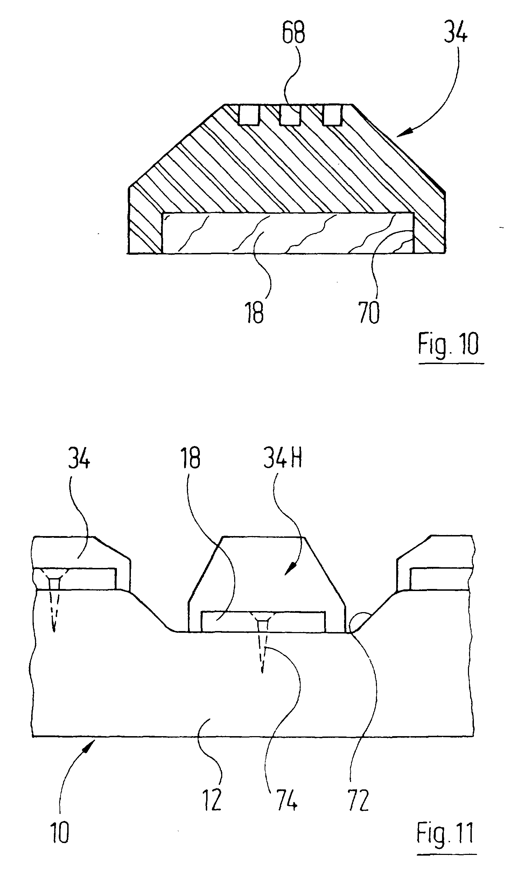

Wie am besten aus Figur 10 ersichtlich, haben die einzelnen Polsterelemente 34 im wesentlichen die Form eines Trapezes (Dreieck bei welchem die Spitze und die seitlichen Ecken abgeschnitten ist). In die Oberseite des Polsterelementes 34 sind jeweils bezogen auf die Polsterelementachse lateral beabstandete Nuten 68 eingearbeitet, die sich über die gesamte Länge der Polsterelemente erstrecken. Über die Anzahl, den Abstand, die Breite und die Tiefe der Nuten 68, die unter den Nuten 68 auch unterschiedlich gewählt sein können, kann man die Federeigenschaften des obersten Bereiches der Polsterelemente 34 einstellen und damit die Nachgiebigkeit der Liegefläche für kleine Belastungen vorgeben. Bei größeren Belastungen der Polsterelemente 34 wird dann die Volumenelastizität des Materiales wirksam, aus welchem die Polsterelemente hergestellt sind.

Auf der Unterseite haben die Polsterelemente 34 nach Figur 10 eine breite Aufnahmenut 70, welche formschlüssig über die Latte 18 paßt.

Wünscht man bei einem Lattenrost, wie er in Figur 9 gezeigt ist, eine in Rostlängsrichtung variable Nachgiebigkeit, so kann man hierzu unterschiedliche Polsterelemente 34 verwenden, die sich bei gleicher Außengeometrie in der Härte des Materiales unterscheiden, aus welchem die Polsterelemente gefertigt sind.

Um lokal einen vergrößerten Federweg bereitzustellen, kann man einzelne der Latten 18 tieferliegend am Rahmen 10 befestigen. Hierzu sind die Längsholme 12 des Rahmens 10 an den entsprechenden Stellen mit Randausnehmungen 72 versehen, in welche die Enden der entsprechenden Latten 18 eingreifen.

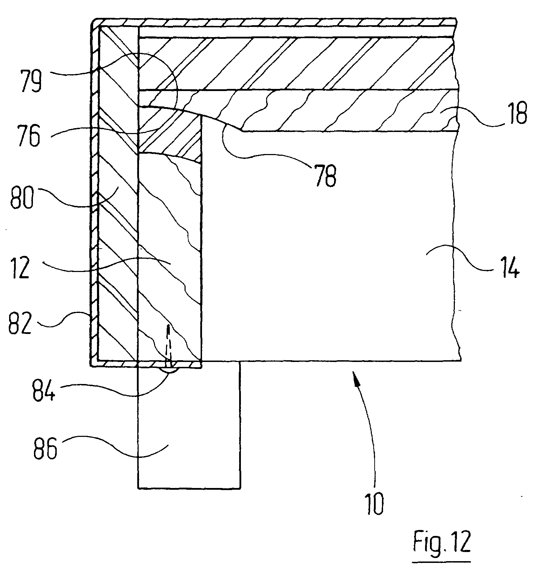

Wie aus Figur 11 ersichtlich, kann man die Befestigung der Lattenenden an den Längsholmen 12 unter Verwendung von Schrauben 74 vornehmen.

Diejenigen Latten 18, die wie in Figur 11 gezeigt vertieft angeordnet sind, tragen erhöhte Polsterelemente 34H, derart, daß die Oberseiten der verschiedenen Polsterelemente im unbelasteten Zustand eine durchgehende Fläche vorgeben.

Man erkennt, daß die in Figur 11 gezeigte Anordnung ein lokal stärkeres Einfedern ermöglicht, wie es z.B. im Schulterbereich gewünscht wird.

In weiterer Abwandlung kann man der Liegefläche auch eine gewünschte Konturierung geben, so daß sie im unbelasteten Zustand nicht eben durchgehend ist. So kann man z.B. bei dem Lattenrost nach Figur 9 ein im Kniebereich liegendes Polsterelement 34K mit grösserer Höhe ausbilden, um eine bessere Unterstützung der Kniekehlen zu erhalten. Das Polsterelement 34K kann eine ähnliche Querschnittsform aufweisen, wie für das Polsterelement 34H in Figur 11 dargestellt. Um einen weicheren Übergang zu dem normalen Polsterelement 34 zu schaffen, kann man dem Polsterelement 34K benachbarte Polsterelemente mit dazwischenliegender Höhe vorsehen.

Figur 12 zeigt einen Teilschnitt durch eine Liege, welche ausgehend von einem Lattenrost konzipiert ist, wie er obenstehend unter Bezugnahme auf die Figuren 1 bis 11 erläutert wurde. Komponenten, die obenstehend in funktionsäquivalenter Form schon beschrieben wurden, sind wieder mit denselben Bezugszeichen versehen.

Um zusätzlich ein Einfedern der starren Latten 18 zu erhalten, sind diese an ihren Enden über Gummiblockfedern 76 an der Oberseite der Längsholme 12 abgestützt. Um ein großhubiges Einfedern zu ermöglichen, sind die Lattenenden an ihrer Unterseite mit einer kreisbogenförmigen Ausnehmung 78 versehen, und die Oberseite 79 der Längsholme 12 ist konzentrisch kreisbogenförmig abgefräst.

Auf die Außenseite der Längsholme 12 (und der Querholme 14) ist eine Polsterschicht 80 aufgebracht.

Der gesamte so erhaltene Polsterrahmen ist von einem Überzug 82 umgeben, der unter Verwendung von Nägeln 84 an der Unterseite des Rahmens 10 befestigt ist. Der Überzug 82 ist aus einem dehnbaren Material, insbesondere einem Gewirk, z.B. einem Trikotstoff hergestellt, so daß er bei Herstellung mit leichtem Untermaß straff über der Polsterschicht 80 und den Polsterelementen 34 liegt.

Eine derartige Polsterliege hat ein ansprechendes Äusseres und bietet einen guten Liegekomfort. Falls gewünscht kann der gesamte Polsterrahmen über Füsse 86 auf dem Boden stehen.

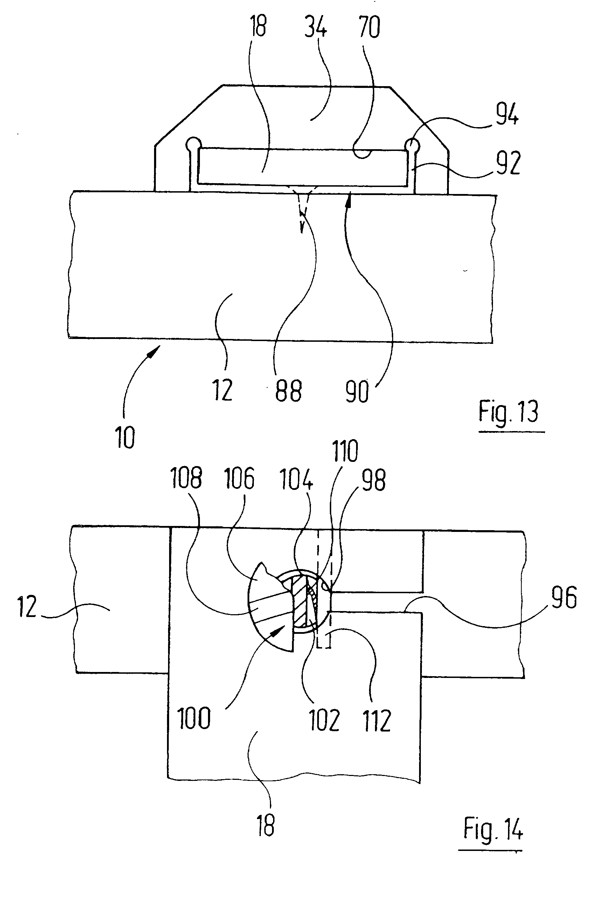

Gemäß Figur 13 sind auf den Längsholmen 12 unter Verwendung von Schrauben 88 Klemmbügel 90 befestigt, die seitliche Klemmschenkel aufweisen, die die Seitenflächen einer zugeordneten Latte 18 formschlüssig übergreifen und an ihren Enden mit Wulsten 94 versehen sind, welche die Oberseite der zugeordneten Latte 18 übergreifen. Auf diese Weise ist die Latte 18 mit dem Klemmbügel 90 und damit dem Längsholm 14 verrastet. Falls gewünscht kann der Benutzer die Latte 18 unter Aufbrechen der Rastverbindung vom Rahmen 10 abnehmen.

Figur 14 zeigt eine mechanische Verriegelung zwischen einem Lattenende und einem Längsholm. In das Lattenende ist ein transversaler (also in Holmlängsrichtung verlaufender) zur Lattenseitenfläche hin offener Schlitz 96 eingefräst, der in einer Verriegelungsöffnung 98 endet. Ein insgesamt mit 100 bezeichneter Verriegelungszapfen hat einen unteren zylindrischen Zapfenabschnitt 102, der axial fixiert, jedoch drehbar im Rahmen 10 gelagert ist.

Der Verriegelungszapfen 100 hat einen Riegelabschnitt 104, der rechteckigen Querschnitt aufweist. Die Dicke des Riegelabschnittes 104 entspricht im wesentlichen der Breite des Schlitzes 96, während die Länge des Riegelabschnittes 104 etwas kleiner ist als der Durchmesser der Verriegelungsöffnung 98. Auf diese Weise kann der Riegelabschnitt 104 zwischen einer in der Zeichnung wiedergegebenen Verriegelungsstellung und einer in der Zeichnung horizontalen Entnahmestellung verschwenkt werden, in welcher er mit dem Schlitz 96 fluchtet.

Der Verriegelungszapfen 100 hat ferner einen kreisförmigen Flanschabschnitt 106, der die Oberseite der Latte 18 übergreift, und von dem Flanschabschnitt 106 steht ein Greifabschnitt 108 nach oben, der die Form eines Knaufes hat.

Die Axial/Radial-Lagerung des Verriegelungszapfens 100 am Längsholm 12 kann z.B. durch eine Umfangsnut 110 im Zapfenabschnitt 102 und einen hierzu passenden zum Längsholm transversalen Stift 112 erfolgen, welcher im Längsholm 12 gelagert ist.

Nimmt man in Kauf, daß zum Lösen einer Latte der Stift 112 (zumindest teiweise) entfernt werden muß, kann man auf den Schlitz 66 verzichten und zum Abnehmen der Latte den Verriegelungszapfen 100 herausziehen.

Man erkennt, daß der Benutzer, falls gewünscht, die Latten 18 entnehmen kann und durch Latten ersetzen kann, die z.B. nicht starr sind sondern ein gewünschtes Federverhalten aufweisen.

Für Polsterelemente, die durch homogenes federndes Material gebildet sind, wird vorzugsweise ein Schaummaterial verwendet, vorzugsweise ein Kaltschaummaterial. Dieses hat ein spezifisches Gewicht im Bereich von vorzugsweise 50 bis 70 kg/m³ und eine Stauchhärte im Bereich zwischen 2 und 7, vorzugsweise zwischen 2,8 und 3,7.

Der Überzug 88 kann aus textilem Material sein, insbesondere ein Gewirk. Stattdessen kann man den Überzug auch in situ auf den Polsterelementen erzeugen, indem man diese beflockt.

Die oben beschriebenen Lattenrahmen haben den Vorteil, daß sie zumindest einen Teil der Funktionen einer Matratze mit übernehmen. Dies ermöglicht es, verglichen mit herkömmlichen Lattenrosten nur dünnere Matratzen zu verwenden. Solche sind im Hinblick auf die Handhabung durch den Benutzer vorteilhaft.

Ein weiterer Vorteil der oben beschriebenen Lattenroste ist der, daß die Grundstruktur für alle Benutzer gleich ausgeführt werden kann, wenn die Latten 34 starr sind. Individuelle Wünsche bezüglich der Härte der Liegefläche können dadurch realisiert werden, daß man Polsterelemente 34 unterschiedlicher Nachgiebigkeit verwendet.

Ist der Lattenrost nach längerem Gebrauch lokal durchgelegen, kann man ihn durch einfaches Auswechseln der Polsterelemente wieder in den Neuzustand versetzen. Die schwere und teure Grundkonstruktion kann aber weiterhin verwendet werden.

Auch ein schon gekaufter Lattenrost läßt sich leicht für die Erfordernisse von Personen unterschiedlichen Gewichtes umrüsten.

Diese vorteilhaften Eigenschaften werden bei günstigen Herstellungskosten erreicht.

Anders als bei herkömmlichen Lattenrosten hat man über die gesamte Liegefläche konstante Nachgiebigkeit und kann stoßfrei durch Nebeneinandersetzen von Lattenrosten Mehrfach-Liegeflächen einfach realisieren.

Sowohl das Vorsehen einer Schulterabsenkung als auch das Vorsehen lokal erhöhter Abschnitte lassen sich auf sehr einfache Weise und sehr variabel realisieren.

Der oben beschriebene Aufbau eines Lattenrostes ist gleichermaßen für Lattenroste ohne Verstellmöglichkeit, Roste mit verstellbaren Rostabschnitten und auch für Motorrahmen verwendbar.

Ein weiterer Vorteil der oben beschriebenen Lattenroste ist der, daß die Rahmeninnenseite frei von Komponenten wie die lattenlagernden Beschläge ist.

## Patentansprüche

1. Lattenrost für Betten und Liegemöbel mit einem ebenen
Rahmen (10) und mit vom Rahmen (10) getragenen Latten (18), welche lösbar mit ihnen verbundene in Quer-Reihen angeordnete Polsterelemente (34) tragen, **dadurch gekennzeichnet, daß** jedes Polsterelement (34) einer Reihe jeweils in einen eigenen Überzug (60) eingeschlossen ist oder eine Beflockung trägt.

2. Lattenrost nach Anspruch 1, **dadurch gekennzeichnet,**
**daß** die Polsterelemente (34) elastisch verformbare mit den Rändern der Latten (18) zusammenarbeitende Halteabschnitte (48) aufweisen.

3. Lattenrost nach Anspruch 1 oder 2, **dadurch gekennzeichnet, daß** die Polsterelemente (34) verschiebbar von den Latten (18) getragen sind.

4. Lattenrost nach einem der Ansprüche 1 bis 3, **dadurch gekennzeichnet, daß** zumindest ein Teil der Polsterelemente (34) eine elastisch verformbare Materialschicht aufweist.

5. Lattenrost nach einem der Ansprüche 1 bis 4, **dadurch gekennzeichnet, daß** zumindest ein Teil der Polsterelemente (34) elastisch verformbare Federn, insbesondere Schraubenfedern (56) umfaßt.

6. Lattenrost nach einem der Ansprüche 1 bis 5, **dadurch gekennzeichnet, daß** die Oberseiten der Polsterelemente in unbelastetem Zustand im wesentlichen in einer gemeinsamen Ebene liegen.

7. Lattenrost nach einem der Ansprüche 1 bis 6, **dadurch gekennzeichnet,**
**daß** die Latten über Federelemente am Rahmen (10) gelagert sind.

## Claims

1. Slatted base for beds and reclining furniture with a plane frame (10) and with slats (18) which are borne by the frame (10) and which bear upholstery elements (34) which are connected to the slats in a detachable manner and disposed in transverse rows, **characterised in that** each upholstery element (34) of a row is enclosed in an individual cover (60) or bears flocking.

2. Slatted base according to Claim 1, **characterised in that** the upholstery elements (34) have elastically deformable holding portions (48) which co-operate with the edges of the slats (18).

3. Slatted base according to Claim 1 or 2, **characterised in that** the upholstery elements (34) are borne by the slats (18) in a displaceable manner.

4. Slatted base according to any one of Claims 1 to 3, **characterised in that** at least some of the upholstery elements (34) have an elastically deformable material layer.

5. Slatted base according to any one of Claims 1 to 4, **characterised in that** at least some of the upholstery elements (34) comprise elastically deformable springs, in particular helical springs (56).

6. Slatted base according to any one of Claims 1 to 5, **characterised in that** the top sides of the upholstery elements lie substantially in a common plane in the unloaded state.

7. Slatted base according to any one of Claims 1 to 6, **characterised in that** the slats are mounted at the frame (10) via spring elements.

## Revendications

1. Sommier à lattes pour des lits et meubles à coucher avec un cadre plan (10) et des lattes (18) portées par le cadre (10), lesquelles portent des éléments rembourrés (34) disposés en rangées transversales, raccordés de manière amovible à celles-ci, **caractérisé en ce que** chaque élément rembourré (34) d'une rangée est entouré d'un propre revêtement (60) ou porte un flocage.

2. Sommier à lattes selon la revendication 1, **caractérisé en ce que** les éléments rembourrés (34) présentent des sections de support (48) élastiquement déformables coopérant avec les bords des lattes (18).

3. Sommier à lattes selon la revendication 1 ou 2, **caractérisé en ce que** les éléments rembourrés (34) sont portés de manière déplaçable par les lattes (18).

4. Sommier à lattes selon l'une des revendications 1 à 3, **caractérisé en ce qu'**au moins une partie des éléments rembourrés (34) présente une couche de matériau élastiquement déformable.

5. Sommier à lattes selon l'une des revendications 1 à 4, **caractérisé en ce qu'**au moins une partie des éléments rembourrés (34) comprend des ressorts élastiquement déformables, notamment des ressorts de compression (56).

6. Sommier à lattes selon l'une des revendications 1 à 5, **caractérisé en ce que** les côtés supérieurs des éléments rembourrés, à l'état non chargé, sont essentiellement situés dans un niveau commun.

7. Sommier à lattes selon l'une des revendications 1 à 6, **caractérisé en ce que** les lattes sont montées sur le cadre (10) à l'aide d'éléments à ressort (76).
